(19) **Europäisches Patentamt**

**European Patent Office**

**Office européen des brevets**

(11) Veröffentlichungsnummer: **0 268 785**
**A2**

(12) ## EUROPÄISCHE PATENTANMELDUNG

(21) Anmeldenummer: **87114464.8**

(22) Anmeldetag: **03.10.87**

(51) Int. Cl.4: **F16F 13/00** , **F16F 9/32** , **F16F 9/34**

(30) Priorität: **26.11.86 DE 3640316**

(43) Veröffentlichungstag der Anmeldung:
**01.06.88 Patentblatt 88/22**

(84) Benannte Vertragsstaaten:
**DE ES FR GB IT NL SE**

(71) Anmelder: **Continental AG**
**Königsworther Platz 1 Postfach 1 69**
**D-3000 Hannover 1(DE)**

(72) Erfinder: **Eberhard, Günter, Dr.**
**Knülweg 1**
**D-3007 Gehrden 1(DE)**
Erfinder: **Heitzig, Jürgen**
**Geibelstrasse 14**
**D-3000 Hannover(DE)**

(54) **Hydraulisch gedämpftes elastisches Lager.**

(57) Die Erfindung betrifft ein hydraulisch gedämpftes elastisches Lager, insbesondere für den Antriebsmotor in Kraftfahrzeugen, mit dem bei einfachem, eine kostengünstige Herstellung ermöglichenden Aufbau eine wirksame rein hydraulische Dämpfung langhubig-niederfrequenter Schwingungen und eine vollständige Abkopplung akustischer - d. h. kurzhubig-hochfrequenter - Schwingungen erzielbar ist.

FIG.1

## Hydraulisch gedämpftes elastisches Lager

Die Erfindung betrifft ein hydraulisch gedämpftes elastisches Lager gemäß dem Oberbegriff des Patentanspruchs 1. Derartige Lager, die insbesondere zur Abstützung der Antriebsmotoren von Kraftfahrzeugen verwendet werden, sind beispielsweise aus der DE-AS 13 00 367 und der DE-OS 32 33 456 bekannt. Die bisher bekannten Lager dieser Art enthalten als Strömungsmittel eine Flüssigkeit, deren Viskosität im allgemeinen in der Größenordnung von 100 000 cP liegt, und ihre Dämpfung beruht darauf, daß eine senkrecht zur Einfederungsrichtung angeordnete Scheibe in dem hochviskosen Strömungsmittel Verdrängungsarbeit leisten muß. Sie werden daher in den folgenden Erläuterungen kurz als Verdrängerlager bezeichnet. Ebenso wie die nach einem grundsätzlich anderen Funktionsprinzip arbeitenden, z. B. aus der DE-OS 27 27 244 bekannten sogenannten Hydrolager dienen sie dem Zweck, einerseits die sogenannten akustischen - d. h. hochfrequenten - Motorschwingungen abzufangen, so daß sie nicht auf das übrige Fahrzeug übertragen werden, und andererseits niederfrequente Schwingungen durch starke Dämpfung schnell zum Abklingen zu bringen.

Ein gewisser Nachteil der vorstehend erwähnten sogenannten Verdrängerlager - die sich im übrigen durch ihre unkomplizierte, kostengünstige Bauform sowie die Möglichkeit auszeichnen, auf einfache Weise einen Zuganschlag in sie zu integrieren - bestand bisher darin, daß der Abkopplung der akustischen Schwingungen Grenzen gesetzt waren, und zwar als Folge der motorseitig in das hochviskose Strömungsmittel eingeleiteten und durch dieses auf die Fahrzeugkarosserie übertragenen Scherkräfte.

Es stellte sich daher die Aufgabe, ein elastisches Lager zu schaffen, das die Vorteile der bekannten sogenannten Verdrängerlager aufwies und gleichzeitig eine praktisch vollständige Abkopplung der sogenannten akustischen sowie eine wirksame Dämpfung niederfrequent-langhubiger Schwingungen ermöglichte.

Diese Aufgabe wird erfindungsgemäß durch ein Lager gelöst, das die im kennzeichnenden Teil des Patentanspruchs 1 angegebenen Merkmale aufweist, das also - ähnlich wie die sogenannten Verdrängerlager - zwar eine über eine Koppelstange mit dem einen Anschlußteil verbundene, in einem mit Strömungsmittel gefüllten Arbeitszylinder axial verschiebbare Dämpfungsscheibe besitzt, sich jedoch im übrigen durch ein grundsätzlich anderes Konstruktions-und Funktionsprinzip von diesem bekannten Lagertyp unterscheidet.

Im Gegensatz zu den sogenannten Verdrängerlagern ist der Arbeitszylinder des erfindungsgemäßen Lagers nicht mit einem hochviskosen, sondern mit einem niedrigviskosen Strömungsmittel gefüllt, und die Dämpfungsscheibe ist nicht in größerem Abstand von der Wandung des Arbeitszylinders angeordnet, sondern füllt den Querschnitt des Arbeitszylinders aus, wobei sie an ihrem Umfang ringsum ein Querschnittsprofil aufweist, das den Ringspalt zwischen ihr und der Innenwandung des Arbeitszylinders berührungsfrei abdichtet, das also den Übertritt von Strömungsmittel durch den Ringspalt im wesentlichen unterbindet, ohne daß ihre axiale Beweglichkeit durch Haftreibungskräfte eingeschränkt wird. Eine solche berührungsfreie Abdichtung kann durch umlaufende Dichtlippen realisiert werden und ist vorzugsweise als umlaufendes Dichtlabyrinth aus mehreren solchen Dichtlippen ausgebildet.

Die Viskosität des Strömungsmittels - die bei den sogenannten Verdrängerlagern 100 000 cP und mehr beträgt - sollte bei den erfindungsgemäßen Lagern unter 10 000 cP liegen. Bevorzugt wird ein Wert unter 200 cP, wie ihn z. B. Gemische aus Glykol und Wasser aufweisen, da sich gezeigt hat, daß sich damit die besten Voraussetzungen für die angestrebte Abkopplung hochfrequenter Schwingungen ergeben; denn wegen der geringen inneren Reibung solcher niedrigviskosen Strömungsmittel bleiben akustische Schwingungen - die insbesondere von einem laufenden Kraftfahrzeugmotor in das Lager eingeleitet werden und deren Amplituden bekanntlich nur Bruchteile eines Millimeters betragen, so daß sie aufgrund des axialen Spiels, mit dem die Dämpfungsscheibe an der Koppelstange gelagert ist, keine axialen Verschiebungen der Dämpfungsscheibe bewirken können - praktisch ungedämpft.

Dagegen erfahren die mit größeren Amplituden auftretenden niederfrequenten Auslenkungen eine starke Dämpfung; denn sobald beim Ein-oder Ausfedern des Lagers die axiale Verschiebung der mit dem einen Lageranschlußteil verbundenen Koppelstange das axiale Spiel der Lagerung der Dämpfungsscheibe überschreitet und die Dämpfungsscheibe an einem der ihren axialen Freiweg begrenzenden Anschläge zur Anlage kommt, wird die Dämpfungsscheibe - unter Verdrängung von Strömungsmittel von dem einen Teilraum des Arbeitszylinders in den anderen - axial verschoben; und da die besagte Verdrängung des Strömungsmittels bei dem vorgeschlagenen Lager wegen der erfindungsgemäßen Abdichtung des Ringspaltes zwischen der Dämpfungsscheibe und der Zylinderwandung nicht über diesen Ringspalt erfolgen kann, steht ihr nur der die beiden Teilräume des Arbeitszylinders ständig miteinander verbindende kalibrierte Überströmkanal zur Verfügung. In Abhängigkeit im wesentlichen von seiner Länge und Querschnittsform sowie seinem Durchmesser und räumlichen Verlauf drosselt dieser den Strömungsmittelfluß und bewirkt damit eine entsprechende Dämpfung der diesen Strömungsmittelfluß verursachenden langhubigen Auslenkung.

Der Überströmkanal ist vorzugsweise als eine die Dämpfungsscheibe durchsetzende Ausnehmung ausgebildet, wobei es im Hinblick auf die realisierbare Kanallänge zweckmäßig ist, ihn in Gestalt eines sogenannten Ringkanals - also etwa in Form einer ein-oder mehrgängigen Kreiswendel - in die Dämpfungsscheibe einzuformen. In einer besonders vorteilhaften Ausführungsform dieser Art besteht die Dämpfungsscheibe aus einem am freien Ende der Koppelstange gelagerten Innenteil sowie einem Außenteil, in das ein Ringkanal eingeformt ist und· an dessen Umfang ein umlaufendes Dichtlabyrinth angeformt ist.

In weiteren, je nach Anwendungsfall vorteilhaften Ausgestaltungen der Erfindung kann der Überströmkanal in die Koppelstange eingeformt sein, innerhalb der Wandung des Arbeitszylinders verlaufen oder als eine in diese Wandung eingeformte, zum Innenraum des Arbeitszylinders offene Nut, die im Zusammenwirken mit dem ihr gegenüberliegenden Umfangsabschnitt der Dämpfungsscheibe den Drosselquerschnitt darstellt, ausgebildet sein.

Da die in der Praxis auf ein elastisches Lager, wie beispielsweise ein Motorlager, einwirkenden Kräfte nicht nur in Richtung seiner Längsachse, sondern häufig auch schräg dazu auftreten, ist die Verbindung der Dämpfungsscheibe über die Koppelstange mit dem zugehörigen Anschlußteil des Lagers vorzugsweise nicht völlig starr, sondern gelenkig und/oder flexibel ausgebildet. Insbesondere ist die Koppelstange mittels eines Kugelgelenks oder über ein elastisches Verbindungsstück an dem Anschlußteil gelagert, oder sie selbst kann quer zu ihrer Längsachse elastisch biegsam ausgeführt sein.

Eine weitere Verbesserung des erfindungsgemäßen Lagers, die dessen einwandfreie Funktion unter den meisten Betriebsbedingungen der Praxis optimiert, wird dadurch erzielt, daß mindestens das Außenteil der Dämpfungsscheibe, das an seinem Umfang ringsum das den Ringspalt zur Innenwandung des Arbeitszylinders berührungsfrei dichtende Profil aufweist, gegenüber der Koppelstange haftreibungsfrei radial verschiebbar ist. Durch diese Maßnahme wird vermieden, daß radiale Kräfte von der Koppelstange auf den Rand der Dämpfungsscheibe übertragen werden, und somit wird gewährleistet, daß auch bei radialen Auslenkungen des freien Endes der Koppelstange, an dem die Dämpfungsscheibe gelagert ist, die genaue Zentrierung des Außenteiles der Dämpfungsscheibe zum Arbeitszylinder und damit die ringsum berührungslose - also haftreibungsfreie - Abdichtung des Ringspaltes erhalten bleibt. Das heißt, daß die für die optimale Dämpfungsfunktion des Lagers wichtige haftreibungsfreie axiale Beweglichkeit der Dämpfungsscheibe nicht dadurch gestört werden kann, daß der Außenrand der Dämpfungsscheibe einseitig radial nach außen gegen die Arbeitszylinderwandung gedrückt wird und dort Haftreibungskräfte erzeugt.

Dies wird in einer bevorzugten Ausführungsform dadurch realisiert, daß das am freien Ende der Koppelstange gelagerte Innenteil der Dämpfungsscheibe eine zentrische Ausnehmung aufweist, deren Durchmesser größer ist - vorzugsweise um mindestens 20% größer - als der Durchmesser der durch sie hindurchgeführten Koppelstange, wobei diese Ausnehmung beiderseits durch Dichtscheiben lose überdeckt ist, die zentrisch an der Koppelstange gelagert sind. Diese Dichtscheiben beeinträchtigen die praktisch haftreibungsfreie Lagerung der Dämpfungsscheibe weder bezüglich ihres für die Abkopplung akustischer Schwingungen wichtigen axialen Freiweges noch im Hinblick auf ihr radiales Spiel, von dem - wie oben gesagt - die einwandfreie Dämpfung langhubiger niederfrequenter Schwingungen bei nicht genau konzentrischer Verschiebung der Koppelstange abhängen kann.

In einer anderen Ausführungsform der Erfindung erhält der Außenrand der Dämpfungsscheibe dadurch eine entsprechende radiale Beweglichkeit gegenüber dem freien Ende der Koppelstange, daß die Dämpfungsscheibe ein nur mit axialem Freiweg an der Koppelstange gelagertes Innenteil und ein mit radialem Spiel an diesem Innenteil gelagertes Außenteil aufweist. Dies radiale Spiel wird konstruktiv vorzugsweise durch eine am Umfang des Innenteils angeordnete, in radialer Richtung offene umlaufende Nut verwirklicht, in der das ringförmige Außenteil haftreibungsfrei gelagert ist. Die kinematische Umkehrung dieser Variante, also die Anbringung einer entsprechenden Nut am Innenrand des Außenteils, die den äußeren Rand des Innenteils umgreift, liegt ebenfalls im Rahmen der Erfindung.

Eine vorteilhafte Ausgestaltung der Dämpfungsscheibe ist dadurch gekennzeichnet, daß diese aus einem im wesentlichen unverformbar starren, zwischen zwei Anschlägen am freien Ende der Koppelstange mit axialem Spiel zentrisch gelagerten Innenteil und einem aus flexiblem Material hergestellten Außenteil besteht, in das ein ring-bzw. wendelförmiger Überströmkanal eingeformt ist und das an seinem Umfang umlaufende Dichtlippen trägt. Insbesondere kann dieser Überströmkanal in Gestalt einer nach radial außen offenen, ring-bzw.

wendelförmig umlaufenden Nut in den äußersten Rand der Dämpfungsscheibe eingeformt sein.

Vorzugsweise ist das erfindungsgemäße Lager mit einem sogenannten Zuganschlag ausgestattet, der die Auslenkung des über die Koppelstange mit der Dämpfungsscheibe verbundenen Anschlußteils in Entlastungsrichtung begrenzt. Zu diesem Zweck enthält der Arbeitszylinder zwischen diesem Anschlußteil und der Dämpfungsscheibe einen Anschlag für die Dämpfungsscheibe, der sich an dem Anschlußteil abstützt. Vorteilhaft wird dieser Anschlag von einer radial nach innen ragenden Kante des Gummi-Federelementes des Lagers gebildet.

Die Zeichnung erläutert die Erfindung anhand - schematisch, nicht maßstäblich dargestellter Ausführungsbeispiele, und zwar zeigen die Figuren 1 und 2 je einen Gesamtlängsschnitt durch verschiedene Ausführungsformen des erfindungsgemäßen Lagers, während die Figuren 3 und 4 jeweils nur den Arbeitszylinder mit unterschiedlichen Ausgestaltungen der Dämpfungsscheibe wiedergeben.

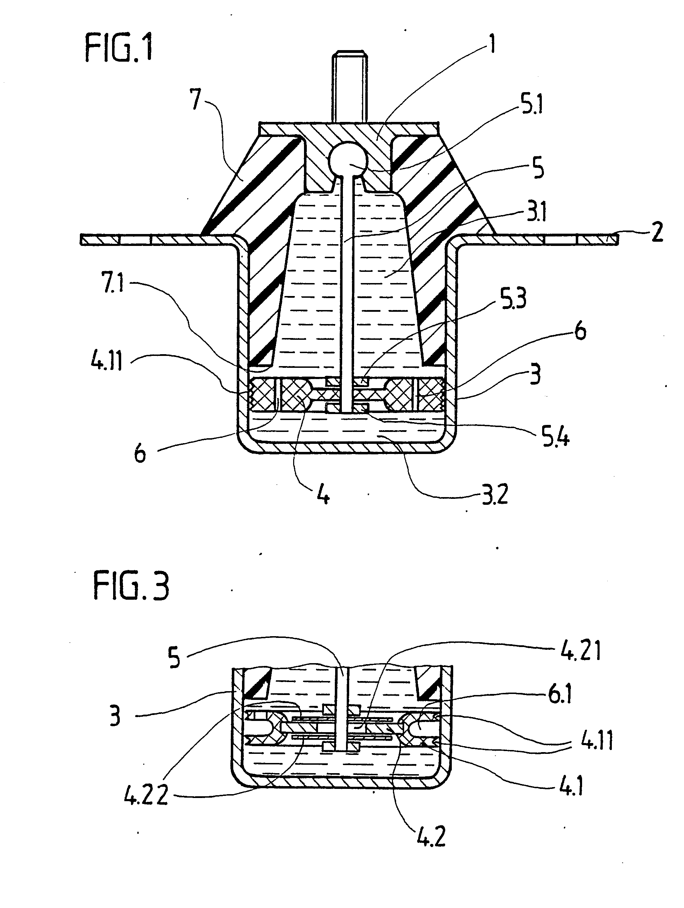

Wie Fig. 1 zeigt, weist das erfindungsgemäße Lager Anschlußteile 1 und 2 auf, an denen es z. B. einerseits mit dem Motor und andererseits am Chassis eines Kraftfahrzeuges verschraubt werden kann und die sich über ein im wesentlichen ringförmiges gummielastisches Federelement 7 gegeneinander abstützen. Am ersten Anschlußteil 1 ist - im dargestellten Fall über ein Kugelgelenk 5.1 - die Koppelstange 5 gelagert, die zentrisch in den mit dem zweiten Anschlußteil 2 fest verbundenen Arbeitszylinder 3 hineinragt und an ihrem freien Ende mit durch zwei Anschläge 5.3 und 5.4 begrenztem axialen Spiel - dem sogenannten Freiweg - die Dämpfungsscheibe 4 trägt. Die Dämpfungsscheibe 4 unterteilt den mit einem niedrigviskosen Strömungsmittel gefüllten Arbeitszylinder 3 in zwei Teilräume 3.1 und 3.2, die über mindestens einen kalibrierten Überströmkanal 6 ständig miteinander verbunden sind. An ihrem Umfang weist die Dämpfungsscheibe 4 ein Profil 4.11 auf, das eine sogenannte berührungsfreie Abdichtung des Ringspaltes zwischen der Dämpfungsscheibe und der Innenwand des Arbeitszylinders bildet und somit eine haftreibungsfreie axiale Verschiebung der Dämpfungsscheibe im Arbeitszylinder ermöglicht.

Solange über das Anschlußteil 1 nur hochfrequente, kurzhubige Schwingungen in das Lager eingeleitet werden, deren Gesamtamplituden den durch die Anschläge 5.3 und 5.4 bestimmten Freiweg der Dämpfungsscheibe nicht überschreiten, bleibt die Dämpfungsscheibe davon unbeeinflußt in ihrer durch die statische Grundbelastung vorgegebenen Mittellage stehen, und diese Schwingungen werden daher durch das gummielastische Federelement 7 ungedämpft abgefangen.

Wird dagegen durch langhubige Auslenkungen bzw. Schwingungen des Anschlußteils 1 der besagte Freiweg überschritten, so führt dies zu einer axialen Verschiebung der Dämpfungsscheibe 4 und damit zu einer Verdrängung von Strömungsmittel von dem einen Teilraum 3.1 des Arbeitszylinders durch den Überströmkanal 6 in den anderen Teilraum 3.2 des Arbeitsxzylinders bzw. in umgekehrter Richtung. Infolge der Drosselwirkung des Uberströmkanals 6 - bzw. der Uberströmkanäle - erfahren die langhubigen Auslenkungen dabei eine durch die Geometrie des Uberströmkanals festgelegte mehr oder weniger starke Dämpfung, die wegen der erfindungsgemäßen haftreibungsfreien axialen Verschiebbarkeit der Dämpfungsscheibe nicht durch Reibungskräfte verfälscht wird.

Die in den Arbeitszylinder 3 hineinragende Kante 7.1 des Gummi-Federelements 7, an der die Dämpfungsscheibe 4 bei starker Entlastung des Lagers zur Anlage kommt, bildet einen konstruktiv und herstellungstechnisch unkompliziert und kostengünstig realisierbaren sogenannten Zuganschlag.

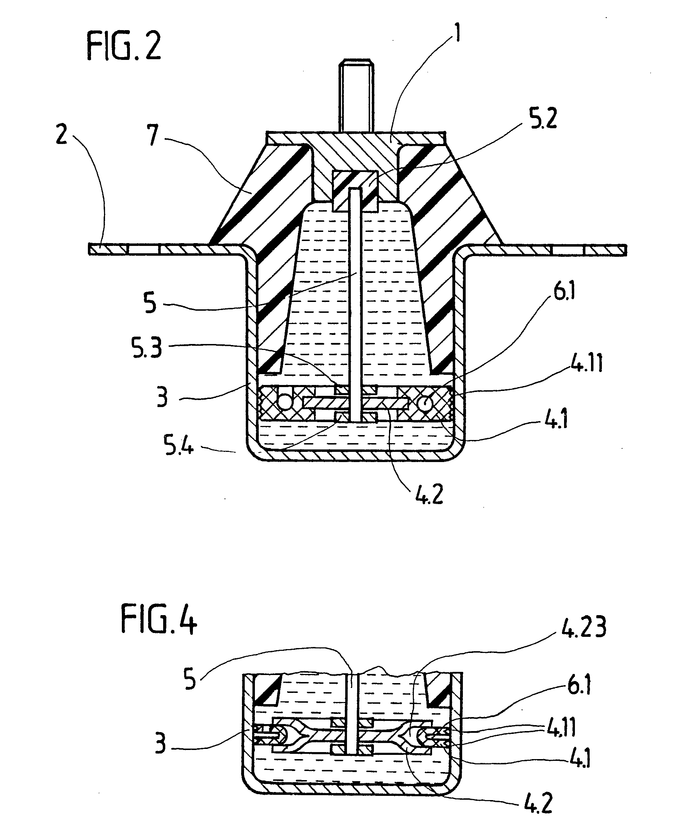

Bei dem in Fig. 2 dargestellten Ausführungbeispiel der Erfindung ist die Koppelstange 5 über ein elastisches Verbindungsstück 5.2 am Anschlußteil 1 angelenkt. Die Dämpfungsscheibe besteht hier aus einem im wesentlichen unverformbaren Innenteil 4.2, das zwischen den Anschlägen 5.3 und 5.4 am freien Ende der Koppelstange 5 mit axialem Spiel zentrisch gelagert ist, und einem an diesem Innenteil befestigten bzw. gelagerten flexiblen Außenteil, in das der Uberströmkanal in Form eines sogenannten Ringkanals 6.1 eingeformt ist und das an seinem Umfang ein Dichtlabyrinth 4.11 aus umlaufenden Dichtlippen aufweist.

Fig. 3 zeigt eine Dämpfungsscheibe, deren zentrische Ausnehmung 4.21 einen deutlich größeren Durchmesser besitzt als die durch sie hindurchgeführte Koppelstange 5, wobei diese Ausnehmung 4.21 beiderseits durch zentrisch an der Koppelstange gelagerte Dichtscheiben 4.22 lose überdeckt ist. Hierdurch ist die Dämpfungsscheibe gegenüber der Koppelstange praktisch haftreibungsfrei radial verschiebbar, und kleine radiale Auslenkungen der Koppelstange übertragen keine radialen Kräfte auf die Dämpfungsscheibe.

Ferner ist in Fig. 3 eine besonders vorteilhafte Anordnung des Überströmkanals dargestellt, der hier als Ringkanal 6.1 in Form einer nach radial außen offenen Nut in das flexible Außenteil 4.1 der Dämpfungsscheibe integriert ist, wobei auch hier umlaufende Dichtlippen 4.11 für eine berührungsfreie Dichtung gegenüber der Innenwandung des Arbeitszylinders 3 sorgen.

Bei der in Fig. 4 wiedergegebenen Dämpfungsscheibe ist der Überströmkanal ähnlich wie in Fig. 3 ausgeführt. Jedoch wird bei dieser Ausführungsform die Übertragung radialer Auslenkungskräfte von der Koppelstange 5 auf das die berührungsfreie Dichtung 4.11 tragende Außenteil 4.1 der Dämpfungsscheibe 4 dadurch vermieden, daß das Außenteil 4.1 in einer am Innenteil 4.2 angebrachten umlaufenden Nut 4.23 radial verschieblich gelagert ist.

## Ansprüche

1. Hydraulisch gedämpftes elastisches Lager, insbesondere für den Antriebsmotor in Kraftfahrzeugen, das ein erstes Anschlußteil aufweist, welches sich über ein im wesentlichen ringförmiges Gummi-Federelement gegen ein zweites Anschlußteil abstützt, wobei an dem ersten Anschlußteil eine Koppelstange befestigt ist, die konzentrisch in einen fest mit dem zweiten Anschlußteil verbundenen, mit einem Strömungsmittel gefüllten topfförmigen Arbeitszylinder hineinragt und an deren freiem Ende eine in diesem Arbeitszylinder axial verschiebbare Dämpfungsscheibe im wesentlichen senkrecht zur Achse des Arbeitszylinders angeordnet und mit axialem Spiel gelagert ist, **dadurch gekennzeichnet,** daß der Arbeitszylinder (3) mit einem niedrigviskosen Strömungsmittel gefüllt ist und die Dämpfungsscheibe (4) den Querschnitt des Arbeitszylinders (3) nahezu ausfüllt, wobei die Dämpfungsscheibe (4) an ihrem Umfang ringsum ein den Ringspalt zwischen der Dämpfungsscheibe (4) und der Innenwandung des Arbeitszylinders (3) berührungsfrei dichtendes Profil aufweist und die durch die Dämpfungsscheibe (4) voneinander getrennten Teilräume (3.1) und (3.2) des Arbeitszylinders (3) durch mindestens einen einerseits in den Teilraum (3.1) und andererseits in den Teilraum (3.2) mündenden kalibrierten Überströmkanal (6) miteinander verbunden sind.

2. Elastisches Lager nach Anspruch 1, dadurch gekennzeichnet, daß die Dämpfungsscheibe (4) an ihrem Umfang ein umlaufendes Dichtlabyrinth (4.11) aufweist.

3. Elastisches Lager nach Anspruch 1 oder 2, dadurch gekennzeichnet, daß die Viskosität des Strömungsmittels weniger als 10 000 cP (Zentipoise) beträgt.

4. Elastisches Lager nach Anspruch 3, dadurch gekennzeichnet, daß die Viskosität des Strömungsmittels weniger als 200 cP beträgt.

5. Elastisches Lager nach einem der Ansprüche 1 bis 4, dadurch gekennzeichnet, daß der Überströmkanal (6) als eine die Dämpfungsscheibe (4) durchsetzende Ausnehmung ausgebildet ist.

6. Elastisches Lager nach Anspruch 5, dadurch gekennzeichnet, daß der Überströmkanal in Gestalt eines Ringkanals (6.1) in die Dämpfungsscheibe (4) eingeformt ist.

7. Elastisches Lager nach Anspruch 6, dadurch gekennzeichnet, daß die Dämpfungsscheibe (4) aus einem Außenteil (4.1) und einem Innenteil (4.2) besteht, wobei das Außenteil (4.1) einen eingeformten Ringkanal (6.1) und ein angeformtes umlaufendes Dichtlabyrinth (4.11) aufweist.

8. Elastisches Lager nach einem der Ansprüche 1 bis 4, dadurch gekennzeichnet, daß der Überströmkanal in die Koppelstange (5) eingeformt ist.

9. Elastisches Lager nach einem der Ansprüche 1 bis 4, dadurch gekennzeichnet, daß der Überströmkanal in die Wandung des Arbeitszylinders (3) eingeformt ist.

10. Elastisches Lager nach Anspruch 9, dadurch gekennzeichnet, daß der Überströmkanal in Gestalt einer zum Innenraum des Arbeitszylinders (3) offenen Nut in die Wandung des Arbeitszylinders eingeformt ist.

11. Elastisches Lager nach einem der Ansprüche 1 bis 10, dadurch gekennzeichnet, daß die Koppelstange (5) mittels eines Kugelgelenks (5.1) an dem Anschlußteil (1) gelagert ist.

12. Elastisches Lager nach einem der Ansprüche 1 bis 10, dadurch gekennzeichnet, daß die Koppelstange (5) über ein elastisches Verbindungsstück (5.2) an dem Anschlußteil (1) gelagert ist.

13. Elastisches Lager nach einem der Ansprüche 1 bis 12, dadurch gekennzeichnet, daß die Koppelstange (5) quer zu ihrer Längsachse elastisch biegsam ist.

14. Elastisches Lager nach einem der Ansprüche 1 bis 13, dadurch gekennzeichnet, daß mindestens das Außenteil (4.1) der Dämpfungsscheibe (4) gegenüber der Koppelstange (5) haftreibungsfrei radial verschiebbar ist.

15. Elastisches Lager nach Anspruch 14, dadurch gekennzeichnet, daß das Innenteil (4.2) der Dämpfungsscheibe (4) eine zentrische Ausnehmung aufweist, deren Durchmesser um mindestens 20% größer ist als der Durchmesser der durch sie hindurchgeführten Koppelstange (5), wobei diese Ausnehmung (4.21) beiderseits durch Dichtscheiben (4.22) lose überdeckt ist, die zentrisch an der Koppelstange (5) gelagert sind.

16. Elastisches Lager nach Anspruch 14, dadurch gekennzeichnet, daß das Außenteil (4.1) der Dämpfungsscheibe (4) mit radialem Spiel an dem Innenteil (4.2) gelagert ist.

17. Elastisches Lager nach Anspruch 16, dadurch gekennzeichnet, daß das Innenteil (4.2) der Dämpfungsscheibe an seinem Umfang eine umlaufende, in radialer Richtung offene U-förmige Nut (4.23) aufweist, in der das ringförmige Außenteil (4.1) haftreibungsfrei mit radialem Spiel gelagert ist.

18. Elastisches Lager nach einem der Ansprüche 1 bis 17, dadurch gekennzeichnet, daß die Dämpfungsscheibe aus einem im wesentlichen unverformbaren, zwischen Anschlägen (5.3, 5.4) am freien Ende der Koppelstange (5) mit axialem Spiel zentrisch gelagerten Innenteil (4.2) und einem ringförmigen flexiblen Außenteil (4.1) besteht, in das ein ring-bzw. wendelförmiger Überströmkanal eingeformt ist und das an seinem Umfang umlaufende Dichtlippen aufweist.

19. Elastisches Lager nach Anspruch 18, dadurch gekennzeichnet, daß der Überströmkanal in Gestalt einer nach radial außen offenen, ring-bzw. wendelförmig umlaufenden Nut in den äußersten Rand der Dämpfungsscheibe eingeformt ist.

20. Elastisches Lager nach einem der Ansprüche 1 bis 19, dadurch gekennzeichnet, daß der Arbeitszylinder (3) zwischen der Dämpfungsscheibe (4) und dem Anschlußteil (1) einen sich am Anschlußteil (1) abstützenden Zuganschlag für die Dämpfungsscheibe (4) enthält.

21. Elastisches Lager nach Anspruch 20, dadurch gekennzeichnet, daß der Zuganschlag von einer radial nach innen ragenden Kante (7.1) des Gummi-Federelements (7) gebildet ist.

**FIG.1**

**FIG.3**

86-58 P

FIG.2

FIG.4